# EUROPEAN PATENT APPLICATION

(11) **EP 4 832 313 A1**
(43) Date of publication of application: **28.10.2026**
(21) Application number: 24916423.7
(22) Date of filing: 11.09.2024
(51) Int. Cl.: H02K 5/173, H02K 5/16, H02K 7/08

(54) **SCANNER MOTOR, LIDAR, AND VEHICLE**

(30) Priority: 10.01.2024 CN 202410046678
(71) Applicant: Huawei Technologies Co., Ltd., Shenzhen, Guangdong 518129 (CN)
(72) Inventor: KONG, Weibing, Shenzhen, Guangdong 518129 (CN); LIU, Famin, Shenzhen, Guangdong 518129 (CN); CHENG, Di, Shenzhen, Guangdong 518129 (CN); ZHANG, Zhichao, Shenzhen, Guangdong 518129 (CN)
(74) Representative: Huawei European IPR
(86) International application number: PCT/CN2024/118183
(87) International publication number: WO 2025/148371

(57) **Abstract**

This application discloses a scanner motor, a lidar, and a vehicle, and relates to the field of motor technologies, addressing a problem in the conventional technology where poor NVH performance of a scanner motor affects scanning accuracy and point cloud accuracy of a lidar. The scanner motor includes a rotor assembly, a stator assembly, a central shaft, a bearing and a preload assembly. The preload assembly includes an annular washer and an annular elastic member, both sleeved on the central shaft. If an inner ring of the bearing is in a clearance fit with the central shaft, the scanner motor further includes a pressing member. The pressing member presses the annular elastic member, to press the annular washer against the inner ring of the bearing. If an outer ring of the bearing is in a clearance fit with the stator assembly, the stator assembly presses the annular elastic member, to press the annular washer against the outer ring of the bearing. If the inner ring of the bearing is in a clearance fit with the stator assembly, the stator assembly presses the annular elastic member, to press the annular washer against the inner ring of the bearing. If the outer ring of the bearing is in a clearance fit with the rotor assembly, the rotor assembly presses the annular elastic member, to press the annular washer against the outer ring of the bearing.

## Description

This application claims priority to Chinese Patent Application No. 202410046678.7, filed with the China National Intellectual Property Administration on January 10, 2024 and entitled "SCANNER MOTOR, LIDAR AND VEHICLE", which is incorporated herein by reference in its entirety.

### TECHNICAL FIELD

This application relates to the field of motor technologies, and in particular, to a scanner motor, a lidar, and a vehicle.

### BACKGROUND

In the field of autonomous driving, as an "eye" of an autonomous vehicle, a vehicle-mounted lidar is one of the most important sensors, and is of great significance for ensuring driving safety of the autonomous vehicle. The lidar is usually mounted on a vehicle roof or in a cockpit. Such a high mounting position enables longer-range target detection and provides a broader overall field of view. However, a distance between the lidar and occupants in the vehicle is short.

In an existing lidar, a scanner motor has poor NVH (noise, vibration, harshness, noise, vibration, and sound vibration roughness) performance, which not only affects scanning accuracy and point cloud accuracy of the lidar, but also affects user experience.

### SUMMARY

This application provides a scanner motor, a lidar, and a vehicle, to resolve a problem in the conventional technology that scanning accuracy and point cloud accuracy of a lidar are affected by poor NVH performance of a scanner motor.

To achieve the foregoing objective, this application uses the following technical solutions.

According to a first aspect, an embodiment of this application provides a scanner motor. The scanner motor includes a rotor assembly, a stator assembly, a central shaft, a bearing and a preload assembly. A magnetic field may be generated between the rotor assembly and the stator assembly to drive the rotor assembly to rotate. The bearing is sleeved on the central shaft. In addition, the inner ring of the bearing may be directly connected to the central shaft in a fitting manner, or may be connected to the central shaft in a fitting manner by using the stator assembly. The bearing may be in the same state as the central shaft, such as a stationary state or a moving state. The central shaft may be in transmission connection to the rotor assembly, that is, the central shaft rotates with the rotor assembly. The central shaft may alternatively be connected to the stator assembly, that is, both the central shaft and the stator assembly remain in a stationary state. An outer ring of the bearing may also be in transmission connection to the rotor assembly or may be connected to the stator assembly. When the central shaft is in transmission connection to the rotor assembly, the outer ring of the bearing is connected to the stator assembly. When the central shaft is connected to the stator assembly, the outer ring of the bearing is in transmission connection to the rotor assembly.

The preload assembly includes an annular washer and an annular elastic member, both the annular washer and the annular elastic member are sleeved on the central shaft, and the annular washer and the central shaft are coaxially mounted. One side of the annular elastic member along an axial direction abuts against the annular washer.

If an inner ring of the bearing is in a clearance fit with the central shaft, the scanner motor further includes a pressing member, and the pressing member is sleeved on the central shaft and is located on a side that is of the annular washer and that is away from the annular elastic member. The pressing member presses the annular elastic member, causing the annular elastic member to deform, so as to press the annular washer against the inner ring of the bearing and apply a preload to the inner ring of the bearing.

If the outer ring of the bearing is in a clearance fit with the stator assembly, the stator assembly presses the annular elastic member, causing the annular elastic member to deform, so as to press the annular washer against the outer ring of the bearing and apply a preload to the outer ring of the bearing.

If the inner ring of the bearing is in a clearance fit with the stator assembly, the stator assembly presses the annular elastic member, causing the annular elastic member to deform, so as to press the annular washer against the inner ring of the bearing and apply a preload to the inner ring of the bearing.

If the outer ring of the bearing is in a clearance fit with the rotor assembly, the rotor assembly presses the annular elastic member, causing the annular elastic member to deform, so as to press the annular washer against the outer ring of the bearing and apply a preload to the outer ring of the bearing.

During running of the scanner motor, the rotor assembly rotates with the outer ring or the inner ring of the bearing. Because the annular washer and the central shaft are coaxially mounted, the annular washer may evenly apply a preload around a circumference of the outer ring or the inner ring of the bearing, so that each steel ball in the bearing is subjected to a uniform force and moves smoothly, thereby eliminating an internal clearance of the bearing, reducing noise of the bearing during running, and ensuring stability of preload of the bearing. Therefore, NVH performance of the scanner motor is improved, scanning accuracy and point cloud accuracy of a lidar that uses the scanner motor are also higher, thereby improving user experience.

Based on the foregoing scanner motor, in some embodiments of this application, the inner ring of the bearing is in a clearance fit with the central shaft. The pressing member is a shaft sleeve, and the shaft sleeve is sleeved on the central shaft and is in an interference fit with the central shaft. A side that is of the annular elastic member and that is away from the annular washer abuts against the shaft sleeve, to press the annular washer against the inner ring of the bearing. The shaft sleeve can limit an axial mounting position of the bearing on the central shaft, and can also be used as the pressing member of the annular elastic member, leading to a compact structure of the scanner motor.

In some other embodiments of this application, the stator assembly includes a bearing sleeve, and the bearing sleeve is sleeved on the bearing and is in a clearance fit with the outer ring of the bearing. A first annular mounting boss is disposed on an inner wall of the bearing sleeve, and the first annular mounting boss is located on a side that is of the annular elastic member and that is away from the annular washer. One side of the annular elastic member along the axial direction abuts against the first annular mounting boss. The other side of the annular elastic member along the axial direction abuts against the annular washer, to press the annular washer against the outer ring of the bearing. The bearing sleeve not only protects and supports the bearing, keeping the bearing in a correct mounting position, but also serves as the pressing member of the annular elastic member, leading to the compact structure of the scanner motor.

In some other embodiments of this application, the outer ring of the bearing is in transmission connection to the rotor assembly. The stator assembly includes a stationary base, and the stationary base is sleeved on the central shaft. The inner ring of the bearing is connected to and in a clearance fit with the stationary base. A second annular mounting boss is disposed on an outer wall of the stationary base, and the second annular mounting boss is located on a side that is of the annular elastic member and that is away from the annular washer. One side of the annular elastic member along the axial direction abuts against the second annular mounting boss, and the other side of the annular elastic member along the axial direction abuts against the annular washer, to press the annular washer against the inner ring of the bearing. The stationary base may not only be used as a stationary structure of other components (such as a stator winding and a stator magnet) in the stator assembly, but also be provided with a pressing structure of the annular elastic member: the second annular mounting boss, leading to the compact structure of the scanner motor.

In some other embodiments of this application, the rotor assembly includes an outer rotor housing, and the outer ring of the bearing is connected to and in a clearance fit with the outer rotor housing. Therefore, the outer ring of the bearing can rotate with the outer rotor housing. A third annular mounting boss is disposed on an inner wall of the outer rotor housing, and the third annular mounting boss is located on a side that is of the annular elastic member and that is away from the annular washer. One side of the annular elastic member along the axial direction abuts against the third annular mounting boss, and the other side of the annular elastic member along the axial direction abuts against the annular washer, to press the annular washer against the outer ring of the bearing. In this embodiment, the outer rotor housing is used as a pressing structure of the annular elastic member, leading to a compact structure of the scanner motor.

The foregoing indicates that for different fitting manners of the bearing, pressing structures of different structures may be used to fit the bearing. In addition, in some embodiments of this application, an annular limiting boss is disposed on a side that is of the annular washer and that is away from the bearing. The annular limiting boss and the central shaft are coaxially disposed. The annular elastic member may be sleeved on the annular limiting boss, to improve radial mounting precision of the annular elastic member and reduce radial fluttering of the annular elastic member. In a case of mechanical shock and vibration, no radial displacement occurs on the annular elastic member, which significantly improves robustness of a bearing preload assembly, and further reduces the abnormal noise of the scanner motor.

Based on this, in some implementations of this application, a longitudinal section of the annular washer is L-shaped. In some other implementations of this application, the longitudinal section of the annular washer is T-shaped. Both the T-shaped annular washer and the T-shaped annular washer have the annular limiting boss, which allows for mounting of the annular elastic member. The L-shaped annular washer and the T-shaped annular washer are simple in structure, facilitating processing.

In addition, the annular elastic member may also have a plurality of solutions, for example, various compression springs. In some implementations, the annular elastic member is a wave spring. The wave spring has advantages of high load bearing capacity, good stability, small size, light weight, long service life, and the like.

It should be noted that there may be one, two, or more bearings in the scanner motor. In some embodiments of this application, the scanner motor includes a plurality of bearings ("a plurality of" herein means two or more), and the plurality of bearings are all mounted on the central shaft and are spaced apart from each other. The plurality of bearings are disposed on the central shaft, so that the central shaft can rotate more stable, reducing running noise of the scanner motor.

Based on this, the annular washer in the preload assembly may be pressed against at least one of an inner ring or an outer ring of any bearing, to preload at least one bearing. In some implementations, the scanner electrode includes a plurality of preload assemblies, and annular washers in the plurality of preload assemblies are respectively pressed against outer rings of the plurality of bearings. Alternatively, the annular washers in the plurality of preload assemblies are respectively pressed against inner rings of the plurality of bearings. Alternatively, some annular washers in the plurality of preload assemblies are respectively pressed against the outer rings of the plurality of bearings, and remaining annular washers in the plurality of preload assemblies are respectively pressed against the inner rings of the plurality of bearings. In this way, the plurality of bearings can be pre-preloaded, and the NVH performance of the scanner motor is improved.

According to a second aspect, an embodiment of this application further includes a lidar, including a reflector and the scanner motor described in the foregoing embodiments. The rotor assembly in the scanner motor is in transmission connection to the reflector, to drive the reflector to rotate and adjust an angle of the reflector. Because a structure of the scanner motor in the lidar in this embodiment of this application is the same as that of the scanner motor in the foregoing embodiment, the two can resolve a same technical problem and obtain same technical effects. Details are not described herein again.

According to a third aspect, an embodiment of this application further includes a vehicle, including a vehicle body and the lidar described in the foregoing embodiment. The lidar is mounted on the vehicle body. Because a structure of the lidar in the vehicle in this embodiment of this application is the same as that of the lidar in the foregoing embodiment, the two can resolve a same technical problem and obtain same technical effects. Details are not described herein again.

### BRIEF DESCRIPTION OF DRAWINGS

To describe the technical solutions in embodiments of this application, the following describes the accompanying drawings used in embodiments of this application.
FIG. 1 is a diagram of a structure of a vehicle according to an embodiment of this application;
FIG. 2 is a diagram of a three-dimensional structure of a scanner motor according to an embodiment of this application;
FIG. 3 is an exploded view of a partial structure of a scanner motor according to an embodiment of this application;
FIG. 4 is a cross-sectional diagram of a scanner motor in Example 1;
FIG. 5 is an enlarged view of a part A in FIG. 4;
FIG. 6 is a diagram of structures of an annular elastic member and an annular washer in the scanner motor in Example 1;
FIG. 7 is a cross-sectional diagram in which a reflector is assembled with the scanner motor in Example 1;
FIG. 8 is a diagram of a three-dimensional structure of a reflector and the scanner motor in Example 1;
FIG. 9 is a cross-sectional diagram of a scanner motor in Example 2;
FIG. 10 is an enlarged view of a part B in FIG. 9;
FIG. 11 is a cross-sectional diagram of a scanner motor in Example 3;
FIG. 12 is an enlarged view of a part C in FIG. 11;
FIG. 13 is a cross-sectional diagram of a scanner motor in Example 4; and
FIG. 14 is an enlarged view of a part D in FIG. 13.

Reference numerals:
1000: automobile; 100: vehicle body; 200: lidar; 1: scanner motor; 11: rotor assembly; 111: outer rotor housing; 1110: accommodating cavity; 1111: third annular mounting boss; 112: permanent magnet; 12: stator assembly; 121: stator core; 122: stationary base; 123: bearing sleeve; 1231: first annular mounting boss; 13: central shaft; 14: bearing; 141: upper bearing; 1411: inner ring of the upper bearing 141; 1412: outer ring of the upper bearing 141; 142: lower bearing; 1421: inner ring of the lower bearing 142; 1422: outer ring of the lower bearing 142; 15: preload assembly; 151: annular washer; 1511: annular limiting boss; 152: annular elastic member; 16: pressing member; 161: shaft sleeve; 17: encoder disk; 18: circlip; 2: reflector.

### DESCRIPTION OF EMBODIMENTS

To make the objectives, technical solutions, and advantages of this application clearer, the following further describes this application in detail with reference to the accompanying drawings.

The terms "first" and "second" mentioned below are merely intended for a purpose of description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more than two.

In addition, in this application, orientation terms such as "up", "down", "left", "right", "horizontal", and "vertical" are defined relative to an orientation in which components are schematically placed in the accompanying drawings. It should be understood that, these directional terms are relative concepts that are used for relative description and clarification, and may vary accordingly based on changes of the orientation in which the components are placed in the accompanying drawings.

In this application, unless otherwise specified and limited, the term "connection" should be understood in a broad sense. For example, the term "connection" may be a connection of a mechanical structure or a connection of a physical structure. For example, the "connection" may be a fixed connection, or may be a detachable connection, or may be an integrated connection, or may be a direct connection, or may be an indirect connection through an intermediate medium. The "connection" may alternatively be understood as physical contact and electrical conduction of components, and may also be understood as a form in which different components in a line structure are connected through physical lines that can transmit an electrical signal, such as a PCB copper foil or a conducting wire.

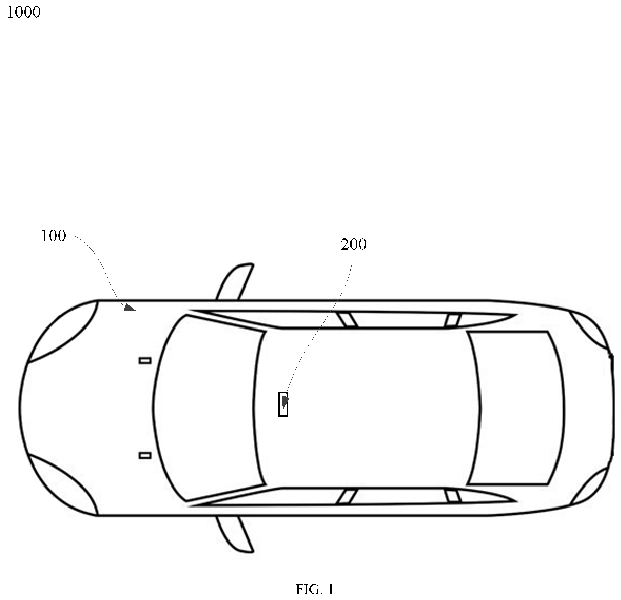

This application provides a vehicle. The vehicle may be an automobile, an electric vehicle, a hybrid vehicle, or the like. A specific form of the vehicle is not specially limited in this embodiment of this application. For ease of description, the following uses an example in which the vehicle is an automobile 1000 shown in FIG. 1 for description.

FIG. 1 is a three-dimensional diagram of an automobile 1000 according to some embodiments of this application. It can be learned from the foregoing that, in this embodiment, the vehicle is the automobile 1000, the automobile 1000 includes a vehicle body 100 and a plurality of sensors, and the plurality of sensors may be mounted on the vehicle body 100. For example, the plurality of sensors include a camera apparatus, a lidar, a millimeter-wave radar, an ultrasonic sensor, and the like. The automobile 1000 obtains environment information around the vehicle by using the plurality of sensors, and analyzes and processes the obtained information, to implement functions such as obstacle perceiving, target recognition, vehicle positioning, route planning, driver monitoring and reminder. This improves driving safety, automation, and comfort of the automobile 1000. Therefore, the automobile 1000 can bring safe and comfortable driving experience to people.

Lidar (laser radar, LR) is short for light detection and ranging. There are many types of lidars 200 in the automobile 1000, such as a mechanical lidar, a solid-state lidar, and a hybrid solid-state lidar. The mechanical lidar is used as an example. The mechanical lidar mainly includes a photodiode, a reflector, a laser emitting apparatus, a laser receiving apparatus, a scanner motor, and the like. The reflector may control a laser emission angle, and may be specifically a micro-electro-mechanical system (micro-electro-mechanical system, MEMS) reflector. The scanner motor is in transmission connection to the reflector, and the scanner motor drives the reflector to rotate, to change an angle of the reflector. The angle of the reflector determines the laser emission angle.

The lidar 200 is mounted outside a vehicle door, on a front part of a vehicle roof, or the like of the automobile 1000. These positions are close to a passenger in the vehicle, and the scanner motor in the lidar 200 needs to have satisfactory NVH performance to ensure user experience. In addition, scanning accuracy and point cloud accuracy of the lidar 200 can be further ensured.

Therefore, to meet the foregoing requirement, an embodiment of this application includes a scanner motor with an improved structure. The scanner motor may be an outer rotor motor. The scanner motor includes a central shaft, where the central shaft may be a rotation shaft or a stationary shaft. Based on different types of central shafts, the following describes the scanner motor with reference to several specific examples.

### Example 1

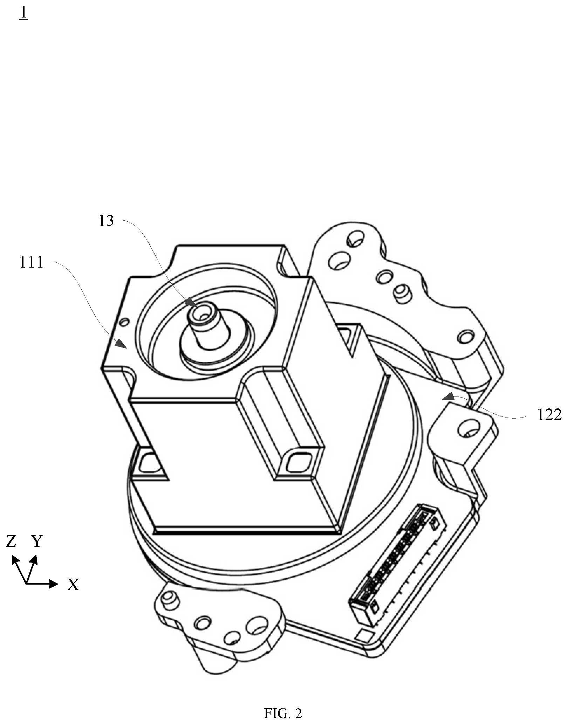

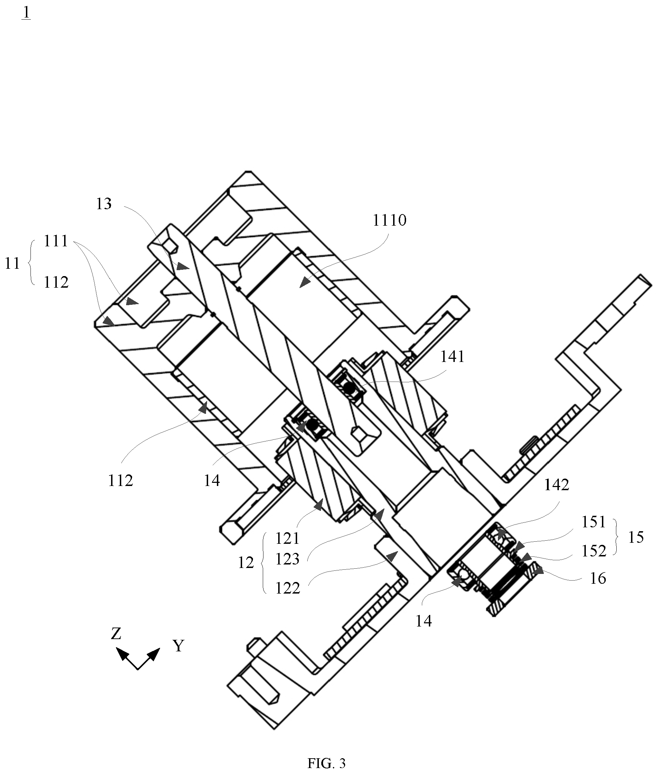

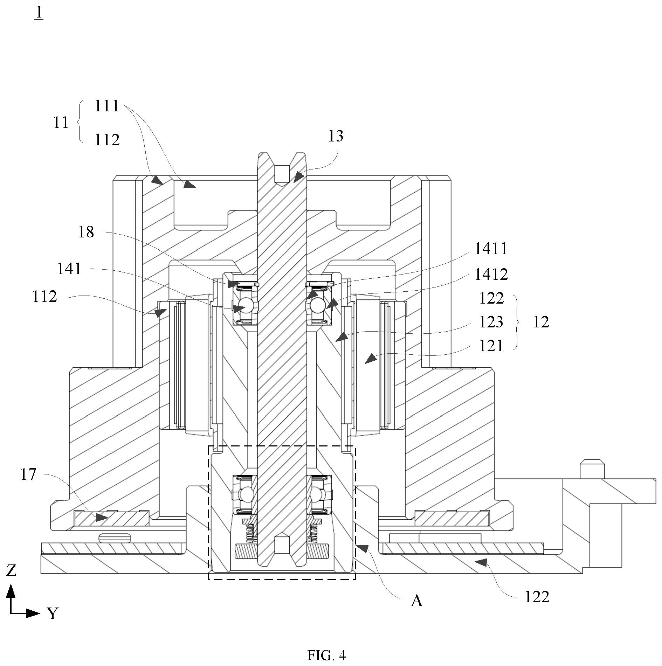

Refer to FIG. 2 and FIG. 3. A scanner motor 1 in this example includes a rotor assembly 11, a stator assembly 12, a central shaft 13, and a bearing 14. The rotor assembly 11 includes an outer rotor housing 111 and a permanent magnet 112. An accommodating cavity 1110 is formed in the outer rotor housing 111, and the stator assembly 12, the central shaft 13, and the permanent magnet 112 are all disposed in the accommodating cavity 1110. As shown in FIG. 4, the permanent magnet 112 may be securely mounted on an inner wall of the outer rotor housing 111, and the permanent magnet 112 may be specifically magnetic steel. The stator assembly 12 may include a stator core 121, a stationary base 122, and a stator winding (not shown in the figure). The stator core 121 is fastened to the stationary base 122. In addition, both the stator core 121 and the stationary base 122 are disposed outside the central shaft 13. The stator winding is wound on the stator core 121. The stator core 121 and the permanent magnet 112 are disposed opposite to each other, and are both located outside the central shaft 13. The central shaft 13 is fastened to the outer rotor housing 111. When the stator assembly 12 is powered on, a magnetic field is generated to drive the rotor assembly 11 and the central shaft 13 to rotate. In this example, the central shaft 13 is a rotation shaft. The bearing 14 may be sleeved on the central shaft 13, and an inner ring of the bearing 14 is connected to the central shaft 13 in a fitting manner.

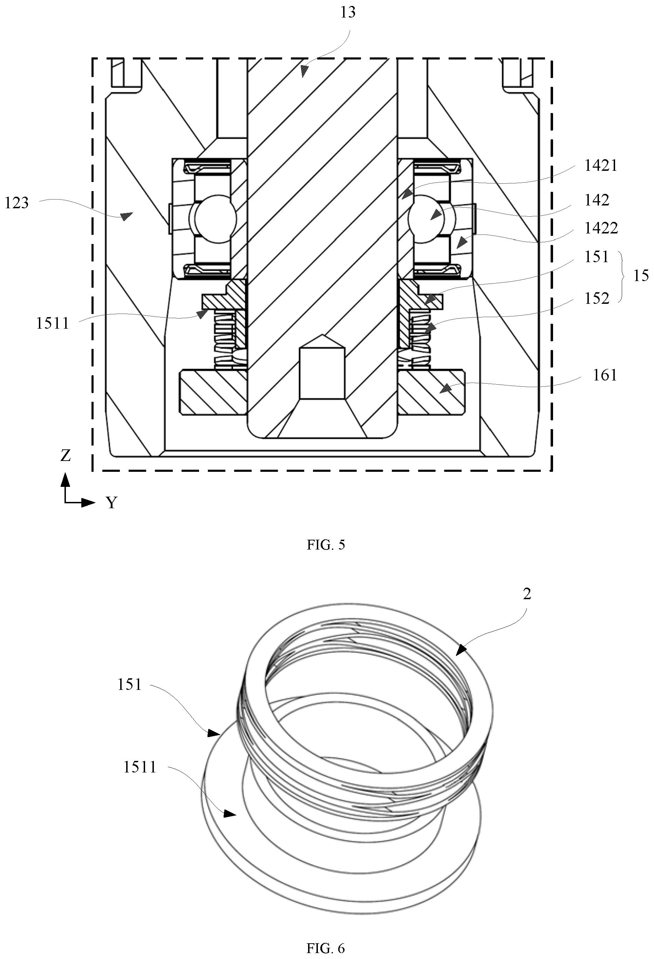

In addition, the scanner motor 1 further includes a preload assembly 15 and a pressing member 16. The preload assembly 15 is configured to cooperate with the pressing member 16 to apply a preload to the bearing 14. As shown in FIG. 5, the preload assembly 15 includes an annular washer 151 and an annular elastic member 152, and both the annular washer 151 and the annular elastic member 152 may be sleeved on the central shaft 13. In addition, the annular washer 151 and the central shaft 13 are coaxially mounted.

It should be noted that, in some embodiments, the stator assembly 12 further includes a bearing sleeve 123, and the bearing sleeve 123 is sleeved on the bearing 14. In addition, the bearing sleeve 123 is fastened to an outer ring of the bearing 14. The bearing sleeve 123 may protect and support the bearing 14, and maintain the bearing 14 in a correct mounting position. Both the stator core 121 and the stationary base 122 may be securely mounted outside the bearing sleeve 123.

In addition, the scanner motor 1 further includes a shaft sleeve 161 shown in FIG. 5. The shaft sleeve 161 is sleeved on the central shaft 13 and is in an interference fit with the central shaft 13. The shaft sleeve 161 may be disposed on one side of the bearing 14 along an axial direction, to limit an axial mounting position of the bearing 14 on the central shaft 13. The axial direction is parallel to a Z-axis direction in FIG. 5.

The pressing member 16 shown in FIG. 3 and FIG. 5 is the foregoing shaft sleeve 161. The shaft sleeve 161 is located on a side that is of the annular elastic member 152 and that is away from the annular washer 151. Two sides of the annular elastic member 152 along the axial direction respectively abut against the annular washer 151 and the shaft sleeve 161, causing the annular elastic member 152 to deform. The shaft sleeve 161 is also used as the pressing member 16 of the annular elastic member 152, leading to a compact structure of the scanner motor 1.

There may be one, or two or more bearings 14 in the scanner motor 1. This is not limited in this application. The scanner motor 1 shown in FIG. 3 and FIG. 4 includes two bearings 14. The two bearings 14 are respectively mounted on an upper part and a lower part of the central shaft 13, and may be respectively referred to as an "upper bearing 141" and a "lower bearing 142". In addition, the upper bearing 141 and the lower bearing 142 may be specifically ball bearings. The upper bearing 141 and the lower bearing 142 may enable the scanner motor 1 to have advantages of high load capacity, high rotation speed capacity, low friction resistance, long service life, high precision, and the like. In this way, the central shaft 13 rotates more stable, and running noise of the scanner motor 1 is reduced.

Moreover, outer rings of the two bearings 14 shown in FIG. 4 are fastened to the stationary base 122 of the stator assembly 12 by using the bearing sleeve 123. An inner ring 1411 of the upper bearing 141 may be in a clearance fit with the central shaft 13, and an inner ring 1421 of the lower bearing 142 may also be in a clearance fit with the central shaft 13. For example, the inner ring 1421 of the lower bearing 142 in FIG. 5 may be in a clearance fit with the central shaft 13. A deformation force generated by the annular elastic member 152 in the preload assembly 15 may press the annular washer 151 against the inner ring 1421 of the lower bearing 142, to apply a preload to the inner ring 1421 of the lower bearing 142.

In comparison, if the annular elastic member 152 directly presses the inner ring 1421 of the lower bearing 142, the annular elastic member 152 after deformation cannot remain coaxial with the inner ring 1421 of the lower bearing 142. As a result, a pressing force applied around a circumference of the inner ring 1421 of the lower bearing 142 becomes non-uniform, making it difficult for the inner ring 1421 of the lower bearing 142 to maintain a uniform pressed-down state. Consequently, steel balls in the lower bearing 142 are subjected to an uneven force, a contact angle between a steel ball on a lifted side and a raceway in the lower bearing 142 changes significantly, and a clearance between the steel ball and the raceway cannot be eliminated. During running of the lower bearing 142, collisions are likely to occur among the ball, the raceway, and a cage, resulting in a large vibration of the scanner motor 1, and even generating abnormal vibration noise. In addition, due to the uneven force to which the lower bearing 142 is subjected, during rotation of the scanner motor 1, micro-impact abnormal noise is also generated between the lower bearing 142 and the central shaft 13 or the bearing sleeve 123.

During running of the scanner motor 1 in this embodiment of this application, the rotor assembly 11, the inner ring 1411 of the upper bearing 141, and the inner ring 1421 of the lower bearing 142 rotate together. Because the annular washer 151 and the central shaft 13 are coaxially mounted, the annular elastic member 152 may evenly apply a preload around the circumference of the inner ring of the lower bearing 142 by using the annular washer 151, so that each steel ball in the lower bearing 142 is subjected to a uniform force and moves smoothly, thereby eliminating an internal clearance of the lower bearing 142. The ball, the raceway, and the cage in the lower bearing 142 do not easily collide with each other, and the micro-impact abnormal noise between the lower bearing 142 and the central shaft 13 or the bearing sleeve 123 is reduced. As a result, noise of the lower bearing 142 during running is reduced (for example, a vibration value of a motor is reduced by approximately 15%, and mechanical-shock resistance reliability is improved by 20%), ensuring stability of preload of the lower bearing 142. In addition, a probability of abnormal noise caused by damage of the lower bearing 142 is reduced. Therefore, NVH performance of the scanner motor 1 is improved, scanning accuracy and point cloud accuracy of a lidar 200 that uses the scanner motor 1 are also higher, thereby improving user experience.

It may be understood that both the inner ring 1411 of the upper bearing 141 and the inner ring 1421 of the lower bearing 142 may be in a clearance fit with the central shaft 13. In some embodiments, the preload assembly 15 in the scanner motor 1 may include a first group of preload assemblies and a second group of preload assemblies. The pressing member 16 includes a first shaft sleeve and a second shaft sleeve. The first shaft sleeve presses an annular elastic member 152 in the first group of preload assemblies, causing the annular elastic member 152 in the same group to deform. The annular washer 151 is pressed against the inner ring 1411 of the upper bearing 141 under a deformation force generated by the annular elastic member 152. The second shaft sleeve presses an annular elastic member 152 in the second group of preload assemblies, causing the annular elastic member 152 in the same group to deform. The annular washer 151 is mounted on the inner ring 1421 of the lower bearing 142 under a deformation force generated by the annular elastic member 152.

In addition, to reduce radial movements of the annular elastic member 152 (a radial direction is parallel to the Y-axis direction in FIG. 5), in some implementations, with reference to FIG. 5, an annular limiting boss 1511 is disposed on a side that is of the annular washer 151 and that is away from the lower bearing 142, and the annular limiting boss 1511 and the central shaft 13 are coaxially disposed. The annular elastic member 152 may be sleeved on the annular limiting boss 1511, to improve radial mounting precision of the annular elastic member 152 and reduce radial movement of the annular elastic member 152. In a case of mechanical shock and vibration, no radial displacement occurs on the annular elastic member 152, which significantly improves robustness of a bearing preload assembly, and further reduces the abnormal noise of the scanner motor 1.

The annular washer 151 may have a plurality of shapes. In some embodiments, as shown in FIG. 5, a longitudinal section of the annular washer 151 is T-shaped. The longitudinal section is parallel to a YZ plane. The annular elastic member 152 is mounted on the annular limiting boss 1511 that is in the T-shaped annular washer and that is away from the lower bearing 142.

In some other embodiments, as shown in FIG. 6, the longitudinal section of the annular washer 151 is L-shaped. The annular washer 151 has the annular limiting boss 1511, and the annular elastic member 152 may be mounted on the annular limiting boss 1511 of the annular washer 151. The L-shaped annular washer and the T-shaped annular washer are simple in structure, facilitating processing.

In addition, the annular elastic member 152 may also have a plurality of solutions, for example, various compression springs. In some implementations, the annular elastic member 152 is a wave spring. The wave spring has advantages of high load bearing capacity, good stability, small size, light weight, long service life, and the like.

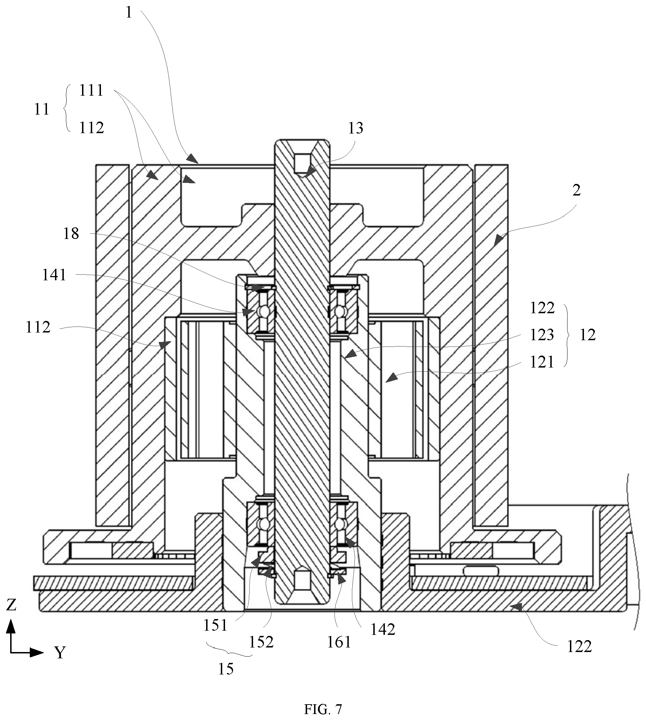

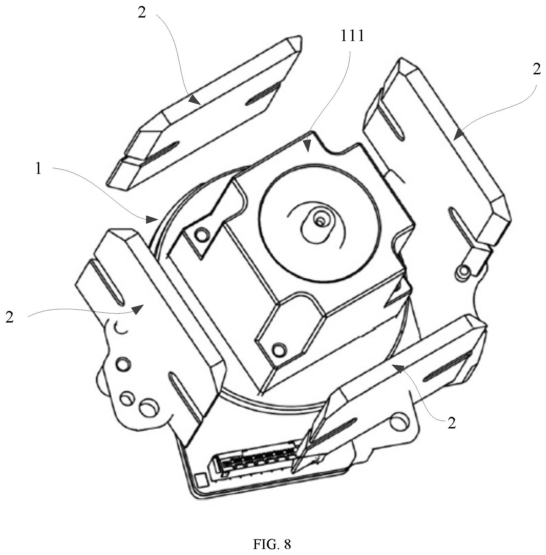

It should be noted that when the scanner motor 1 in this example is used in the lidar 200, a reflector 2 may be mounted outside the outer rotor housing 111 of the rotor assembly 11. As shown in FIG. 7 and FIG. 8, there may be a plurality of reflectors 2 in the lidar 200, and the plurality of reflectors 2 are respectively disposed on different outer surfaces of the outer rotor housing 111.

In addition to the foregoing components, the scanner motor 1 in this example may further include another component. This is not limited in this application. In some embodiments, as shown in FIG. 4, the scanner motor 1 further includes an encoder disk 17, and the encoder disk 17 is mounted on the outer rotor housing 111. The encoder disk 17 may detect a rotation position of the outer rotor housing 111, to obtain a rotation angle of the reflector 2 of the lidar 200. Therefore, a laser emission angle of the lidar 200 is obtained based on the rotation angle of the reflector 2.

In addition, in some embodiments, as shown in FIG. 4, the scanner motor 1 further includes a circlip 18. The circlip 18 is sleeved on the central shaft 13, and is clamped to one side (an upper end of the upper bearing 141 in FIG. 4) of the upper bearing 141. The circlip 18 may limit an axial mounting position of the upper bearing 141, to avoid axial movement of the upper bearing 141.

### Example 2

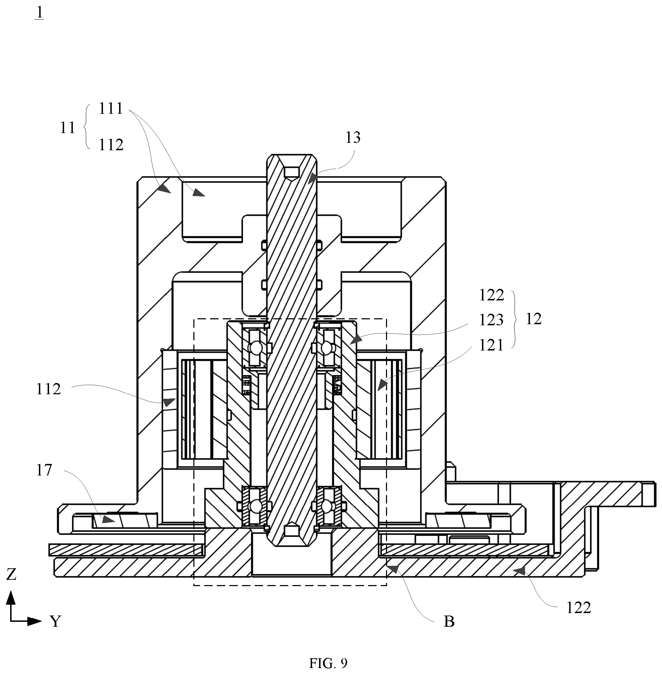

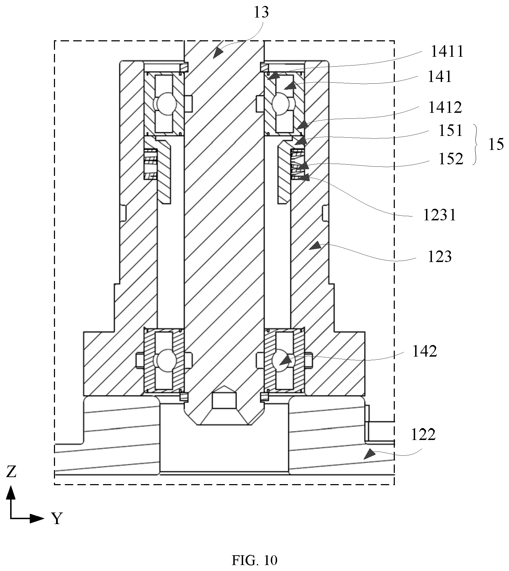

In this example, a central shaft 13 of a scanner motor 1 is a rotation shaft. A structure of the scanner motor 1 in this example is similar to that of the scanner motor 1 in Example 1, and a difference lies in that, as shown in FIG. 9 and FIG. 10, an outer ring 1412 of an upper bearing 141 is in a clearance fit with a bearing sleeve 123. An inner ring 1411 of the upper bearing 141 is fastened to the central shaft 13. A first annular mounting boss 1231 is disposed on an inner wall of the bearing sleeve 123, and the first annular mounting boss 1231 is located on a side that is of an annular elastic member 152 and that is away from an annular washer 151. Along an axial direction, one side (that is, a lower end of the annular elastic member 152 in FIG. 10) of the annular elastic member 152 abuts against the first annular mounting boss 1231, and the other side (that is, an upper end of the annular elastic member 152 in FIG. 10) of the annular elastic member 152 abuts against the annular washer 151, causing the annular elastic member 152 to deform and press the annular washer 151 against the outer ring 1412 of the upper bearing 141. Technical effects that can be obtained in this example are the same as technical effects in Example 1, and details are not described herein again.

It may be understood that, in some embodiments, an outer ring 1422 of a lower bearing 142 may also be in a clearance fit with the bearing sleeve 123, and an inner ring 1421 of the lower bearing 142 is fastened to the central shaft 13. In addition, the bearing sleeve 123 is provided with the first annular mounting boss 1231 corresponding to a position of the outer ring 1422 of the lower bearing 142. One end of the annular elastic member 152 abuts against the first annular mounting boss 1231, and the other end of the annular elastic member 152 abuts against the annular washer 151, causing the annular elastic member 152 to deform and press the annular washer 151 against the outer ring 1422 of the lower bearing 142.

Moreover, in the scanner motor 1 in this example, a stationary base 122 of a stator assembly 12 shown in FIG. 10 is mounted below the bearing sleeve 123 as a support structure of the bearing sleeve 123 and an outer rotor housing 111.

### Example 3

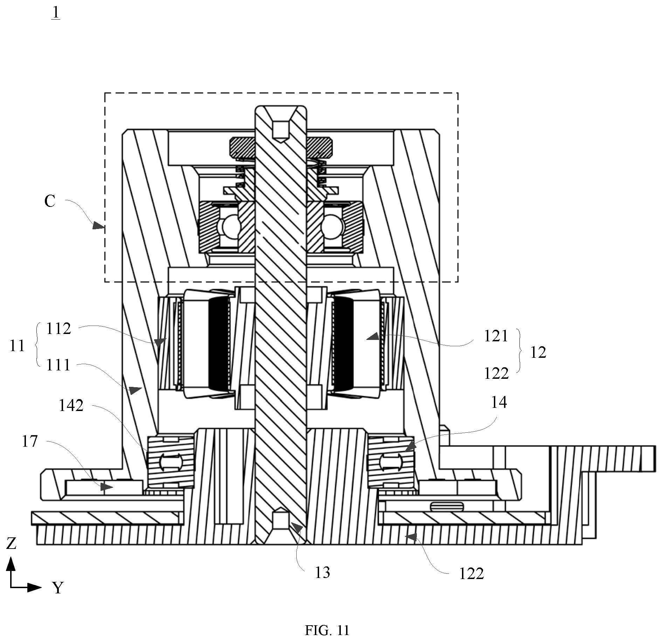

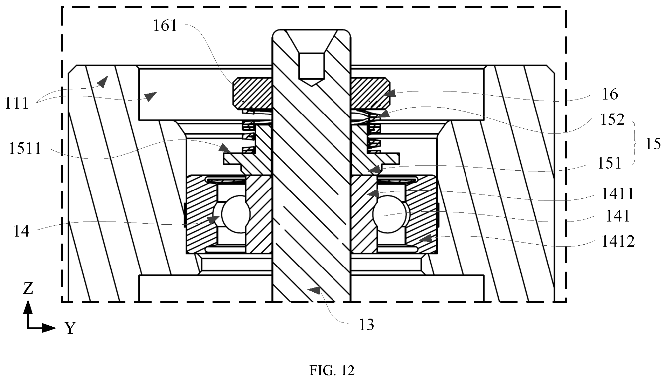

Refer to FIG. 11 and FIG. 12. A scanner motor 1 in this example includes a rotor assembly 11, a stator assembly 12, a central shaft 13, and a bearing 14. The rotor assembly 11 includes an outer rotor housing 111 and a permanent magnet 112. An accommodating cavity 1110 is formed in the outer rotor housing 111, and the stator assembly 12, the central shaft 13, and the permanent magnet 112 are all disposed in the accommodating cavity 1110. The permanent magnet 112 may be securely mounted on an inner wall of the outer rotor housing 111, and the permanent magnet 112 may be specifically magnetic steel. The stator assembly 12 may include a stator core 121, a stationary base 122, and a stator winding (not shown in the figure). The stator core 121 is fastened to the stationary base 122. In addition, both the stator core 121 and the stationary base 122 are sleeved on the central shaft 13. The stator winding is wound on the stator core 121. The stator core 121 and the permanent magnet 112 are disposed opposite to each other, and are both located outside the central shaft 13. The central shaft 13 is securely mounted in the stationary base 122. When the stator assembly 12 is powered on, a magnetic field is generated to drive the rotor assembly 11 to rotate, and both the stator assembly 12 and the central shaft 13 remain stationary. In this example, the central shaft 13 is a stationary shaft. The bearing 14 may be sleeved on the central shaft 13. An inner ring of the bearing 14 is connected to the central shaft 13 in a fitting manner, and an outer ring of the bearing 14 is in transmission connection to the outer rotor housing 111.

In addition, the scanner motor 1 further includes a preload assembly 15 and a pressing member 16. The preload assembly 15 is configured to cooperate with the pressing member 16 to apply a preload to the bearing 14. As shown in FIG. 12, the preload assembly 15 includes an annular washer 151 and an annular elastic member 152, and both the annular washer 151 and the annular elastic member 152 may be sleeved on the central shaft 13. In addition, the annular washer 151 and the central shaft 13 are coaxially mounted.

It should be noted that, in some embodiments, the scanner motor 1 further includes a shaft sleeve 161, and the shaft sleeve 161 is sleeved on the central shaft 13 and is in an interference fit with the central shaft 13. The shaft sleeve 161 may be disposed on one side of the bearing 14 along an axial direction, to limit an axial mounting position of the bearing 14 on the central shaft 13.

The pressing member 16 shown in FIG. 12 is the foregoing shaft sleeve 161. The shaft sleeve 161 is located on a side that is of the annular elastic member 152 and that is away from the annular washer 151. Two sides of the annular elastic member 152 along an axial direction respectively abut against the annular washer 151 and the shaft sleeve 161, causing the annular elastic member 152 to deform. The shaft sleeve 161 is also used as the pressing member 16 of the annular elastic member 152, leading to a compact structure of the scanner motor 1.

There may be one, or two or more bearings 14 in the scanner motor 1. This is not limited in this application. The scanner motor 1 shown in FIG. 11 includes two bearings 14. The two bearings 14 are respectively disposed on an upper part and a lower part in the outer rotor housing 111, and may be respectively referred to as an "upper bearing 141" and a "lower bearing 142". In addition, the upper bearing 141 and the lower bearing 142 may be specifically ball bearings. The upper bearing 141 and the lower bearing 142 may enable the scanner motor 1 to have advantages of high load capacity, high rotation speed capacity, low friction resistance, long service life, high precision, and the like. In this way, the outer rotor housing 111 rotates more stable, and running noise of the scanner motor 1 is reduced.

In addition, as shown in FIG. 11, the upper bearing 141 is disposed outside the central shaft 13. An inner ring 1411 of the upper bearing 141 is connected to the central shaft 13 in a fitting manner, and an outer ring 1412 of the upper bearing 141 is in transmission connection to the outer rotor housing 111. The lower bearing 142 is disposed outside the stationary base 122, that is, is connected to the central shaft 13 by using the stationary base 122. An inner ring 1421 of the lower bearing 142 is connected to the stationary base 122 in a fitting manner, and an outer ring 1422 of the lower bearing 142 is in transmission connection to the outer rotor housing 111. In other words, the outer rotor housing 111 may drive the outer ring 1412 of the upper bearing 141 and the outer ring 1422 of the lower bearing 142 to rotate together.

In addition, the inner ring 1411 of the upper bearing 141 shown in FIG. 12 is in a clearance fit with the central shaft 13. A deformation force generated by the annular elastic member 152 in the preload assembly 15 may press the annular washer 151 against the inner ring 1411 of the upper bearing 141, to apply a preload to the inner ring 1411 of the upper bearing 141.

During running of the scanner motor 1, the rotor assembly 11, the outer ring 1412 of the upper bearing 141, and the outer ring 1422 of the lower bearing 142 rotate together. Because the annular washer 151 and the central shaft 13 are coaxially mounted, the annular washer 151 may evenly apply a preload around a circumference of the inner ring 1411 of the upper bearing 141, so that each steel ball in the upper bearing 141 is subjected to a uniform force and moves smoothly, thereby eliminating an internal clearance of the upper bearing 141. A ball, a raceway, and a cage in the upper bearing 141 do not easily collide with each other, and micro-impact abnormal noise between the upper bearing 141 and the central shaft 13 or the stationary base 122 is reduced. As a result, noise of the upper bearing 141 during running is reduced (for example, a vibration value of a motor is reduced by approximately 15%, and mechanical-shock resistance reliability is improved by 20%), ensuring stability of preload of the upper bearing 141. In addition, a probability of abnormal noise caused by damage of the upper bearing 141 is reduced. Therefore, NVH performance of the scanner motor 1 is improved, scanning accuracy and point cloud accuracy of a lidar 200 that uses the scanner motor 1 are also higher, thereby improving user experience.

It may be understood that, in some embodiments, the inner ring 1421 of the lower bearing 142 may also be in a clearance fit with the stationary base 122. A second annular mounting boss is disposed on an outer wall of the stationary base 122, and the second annular mounting boss is located on a side that is of the annular elastic member 152 and that is away from the annular washer 151. One side of the annular elastic member 152 along the axial direction abuts against the second annular mounting boss, and the other side of the annular elastic member 152 along the axial direction abuts against the annular washer 151. The annular elastic member 152 deforms, and presses the annular washer 151 against the inner ring 1421 of the lower bearing 142, to apply a preload to the inner ring 1421 of the lower bearing 142. Technical effects that can be obtained in this embodiment are the same as technical effects of the foregoing embodiment in which the annular washer 151 is pressed against the inner ring 1411 of the upper bearing 141, and details are not described herein again.

If the inner ring 1411 of the upper bearing 141 is in a clearance fit with the central shaft 13, and the inner ring 1421 of the lower bearing 142 is also in a clearance fit with the stationary base 122, the preload assembly 15 in the scanner motor 1 may include a first group of preload assemblies and a second group of preload assemblies. The shaft sleeve 161 presses an annular elastic member 152 in the first group of preload assemblies to generate a deformation force, thereby mounting a corresponding annular washer 151 on the inner ring 1411 of the upper bearing 141. The second annular mounting boss on the stationary base 122 presses an annular elastic member 152 in the second group of preload assemblies to generate a deformation force, thereby mounting a corresponding annular washer 151 on the inner ring 1421 of the lower bearing 142.

In addition, similarly, to reduce radial movement of the annular elastic member 152, an annular limiting boss 1511 is disposed on a side that is of the annular washer 151 and that is away from the upper bearing 141, and the annular limiting boss 1511 and the central shaft 13 are coaxially disposed. The annular elastic member 152 may be sleeved on the annular limiting boss 1511, to improve radial mounting precision of the annular elastic member 152 and reduce radial movement of the annular elastic member 152. In a case of mechanical shock and vibration, no radial displacement occurs on the annular elastic member 152, which significantly improves robustness of a bearing preload assembly, and further reduces the abnormal noise of the scanner motor 1.

The annular washer 151 may have a plurality of shapes. In some embodiments, a longitudinal section of the annular washer 151 is T-shaped. The longitudinal section is parallel to a YZ plane. The annular elastic member 152 is mounted on the annular limiting boss 1511 that is in the T-shaped annular washer and that is away from the upper bearing 141. In some other embodiments, the longitudinal section of the annular washer 151 is L-shaped. The annular washer 151 has the annular limiting boss 1511, and the annular elastic member 152 may be mounted on the annular limiting boss 1511 of the annular washer 151. The L-shaped annular washer and the T-shaped annular washer are simple in structure, facilitating processing.

In addition, the annular elastic member 152 may also have a plurality of solutions, for example, various compression springs. In some implementations, the annular elastic member 152 is a wave spring. The wave spring has advantages of high load bearing capacity, good stability, small size, light weight, long service life, and the like.

It should be noted that when the scanner motor 1 in this example is used in the lidar 200, a reflector 2 may be mounted outside the outer rotor housing 111 of the rotor assembly 11. There may be a plurality of reflectors 2 in the lidar 200, and the plurality of reflectors 2 are respectively disposed on different outer surfaces of the outer rotor housing 111.

In addition to the foregoing components, the scanner motor 1 in this example may further include another component. This is not limited in this application. In some embodiments, the scanner motor 1 further includes an encoder disk 17, and the encoder disk 17 is mounted on the outer rotor housing 111. The encoder disk 17 may detect a rotation position of the outer rotor housing 111, to obtain a rotation angle of the reflector 2 of the lidar 200. Therefore, a laser emission angle of the lidar 200 is obtained based on the rotation angle of the reflector 2.

In addition, in some embodiments, the scanner motor 1 further includes a circlip 18. The circlip 18 is sleeved on the central shaft 13, and is clamped to one side of the upper bearing 141 or the lower bearing 142. The circlip 18 may limit the axial mounting position of the bearing 14, to avoid axial movement of the bearing 14.

### Example 4

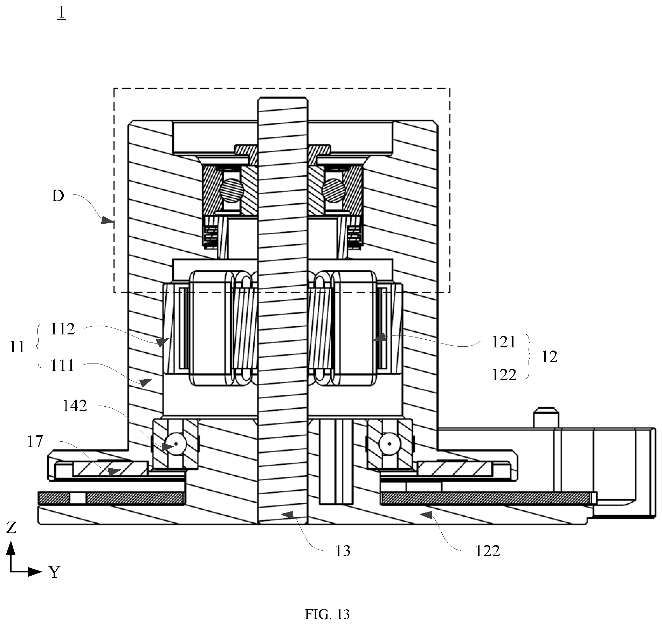

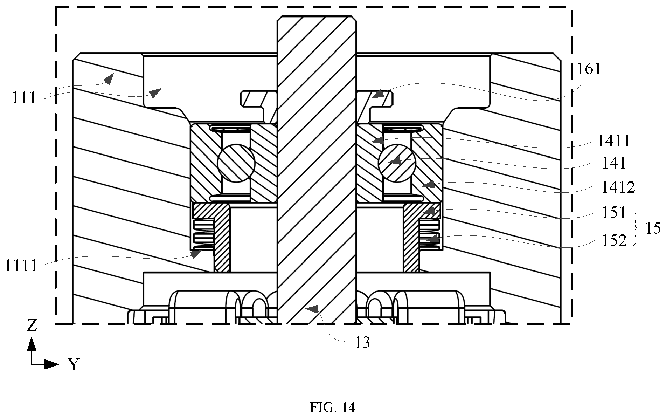

In this example, a central shaft 13 of a scanner motor 1 is a stationary shaft. A structure of the scanner motor 1 in this example is similar to that of the scanner motor 1 in Example 3, and a difference lies in that, as shown in FIG. 13 and FIG. 14, an outer ring 1412 of an upper bearing 141 is in a clearance fit with an outer rotor housing 111. A third annular mounting boss 1111 is disposed on an inner wall of the outer rotor housing 111, and the third annular mounting boss 1111 is located on a side that is of an annular elastic member 152 and that is away from an annular washer 151. One end of the annular elastic member 152 abuts against the third annular mounting boss 1111, and the other end of the annular elastic member 152 abuts against the annular washer 151, causing the annular elastic member 152 to deform and press the annular washer 151 against the outer ring 1412 of the upper bearing 141. Technical effects that can be obtained in this example are the same as technical effects in Example 3, and details are not described herein again.

It may be understood that, in some embodiments, an outer ring 1422 of a lower bearing 142 may also be in a clearance fit with the outer rotor housing 111, and an inner ring 1421 of the lower bearing 142 is fastened to a stationary base 122. In addition, the outer rotor housing 111 is provided with the third annular mounting boss 1111 corresponding to a position of the outer ring 1422 of the lower bearing 142. One end of the annular elastic member 152 abuts against the third annular mounting boss 1111 of the outer rotor housing 111, and the other end of the annular elastic member 152 abuts against the annular washer 151, causing the annular elastic member 152 to deform and press the annular washer 151 against the outer ring 1422 of the lower bearing 142, thereby eliminating an internal clearance of the lower bearing 142.

Alternatively, if both the outer ring 1412 of the upper bearing 141 and the outer ring 1422 of the lower bearing 142 may be in a clearance fit with the outer rotor housing 111, two first annular mounting bosses 1231 are disposed on the inner wall of the outer rotor housing 111. The preload assembly 15 in the scanner motor 1 may include a first group of preload assemblies and a second group of preload assemblies. One first annular mounting boss 1231 presses an annular elastic member 152 in the first group of preload assemblies to generate a deformation force, thereby mounting the annular washer 151 on the outer ring 1412 of the upper bearing 141. The other first annular mounting boss 1231 presses an annular elastic member 152 in the second group of preload assemblies to generate a deformation force, thereby mounting the annular washer 151 on the outer ring 1422 of the lower bearing 142.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A scanner motor, comprising:
a central shaft;
a bearing, wherein the bearing is sleeved on the central shaft;
a rotor assembly and a stator assembly, wherein a magnetic field is generated between the rotor assembly and the stator assembly to drive the rotor assembly to rotate, one of the central shaft and an outer ring of the bearing is in transmission connection to the rotor assembly, the other of the central shaft and the outer ring of the bearing is connected to the stator assembly, and an inner ring of the bearing is connected to the central shaft, or is connected to the central shaft by using the stator assembly; and
a preload assembly, wherein the preload assembly comprises an annular washer and an annular elastic member, both the annular washer and the annular elastic member are sleeved on the central shaft, the annular washer and the central shaft are coaxially mounted, and one side of the annular elastic member along an axial direction is connected to the annular washer, wherein
the bearing is configured as follows: the inner ring of the bearing is in a clearance fit with the central shaft, the scanner motor further comprises a pressing member, the pressing member is sleeved on the central shaft and is located on a side that is of the annular washer and that is away from the annular elastic member, and the pressing member presses the annular elastic member to generate a deformation force, to press the annular washer against the inner ring of the bearing; or
the outer ring of the bearing is in a clearance fit with the stator assembly, and the stator assembly presses the annular elastic member to generate deformation, to press the annular washer against the outer ring of the bearing; or
the inner ring of the bearing is in a clearance fit with the stator assembly, and the stator assembly presses the annular elastic member to generate deformation, to press the annular washer against the inner ring of the bearing; or
the outer ring of the bearing is in a clearance fit with the rotor assembly, and the rotor assembly presses the annular elastic member to generate a deformation force, to press the annular washer against the outer ring of the bearing.

2. The scanner motor according to claim 1, wherein the inner ring of the bearing is in a clearance fit with the central shaft, the pressing member is a shaft sleeve, the shaft sleeve is sleeved on the central shaft and is in an interference fit with the central shaft, and a side that is of the annular elastic member and that is away from the annular washer abuts against the shaft sleeve, to press the annular washer against the inner ring of the bearing.

3. The scanner motor according to claim 1, wherein the stator assembly comprises a bearing sleeve, the bearing sleeve is sleeved on the bearing and is in a clearance fit with the outer ring of the bearing; and
a first annular mounting boss is disposed on an inner wall of the bearing sleeve, the first annular mounting boss is located on a side that is of the annular elastic member and that is away from the annular washer, one side of the annular elastic member along the axial direction abuts against the first annular mounting boss, and the other side of the annular elastic member along the axial direction abuts against the annular washer, to press the annular washer against the outer ring of the bearing.

4. The scanner motor according to claim 1, wherein the outer ring of the bearing is in transmission connection to the rotor assembly, the stator assembly comprises a stationary base, the stationary base is sleeved on the central shaft, and the inner ring of the bearing is connected to and in a clearance fit with the stationary base; and
a second annular mounting boss is disposed on an outer wall of the stationary base, the second annular mounting boss is located on a side that is of the annular elastic member and that is away from the annular washer, one side of the annular elastic member along the axial direction abuts against the second annular mounting boss, and the other side of the annular elastic member along the axial direction abuts against the annular washer, to press the annular washer against the inner ring of the bearing.

5. The scanner motor according to claim 1, wherein the rotor assembly comprises an outer rotor housing, and the outer ring of the bearing is connected to and in a clearance fit with the outer rotor housing; and
a third annular mounting boss is disposed on an inner wall of the outer rotor housing, the third annular mounting boss is located on a side that is of the annular elastic member and that is away from the annular washer, one side of the annular elastic member along the axial direction abuts against the third annular mounting boss, and the other side of the annular elastic member along the axial direction abuts against the annular washer, to press the annular washer against the outer ring of the bearing.

6. The scanner motor according to any one of claims 1 to 5, wherein an annular limiting boss is disposed on a side that is of the annular washer and that is away from the bearing, the annular limiting boss and the central shaft are coaxially disposed, and the annular elastic member is sleeved on the annular limiting boss.

7. The scanner motor according to claim 6, wherein a longitudinal section of the annular washer is L-shaped or T-shaped.

8. The scanner motor according to any one of claims 1 to 7, wherein the annular elastic member is a wave spring.

9. The scanner motor according to any one of claims 1 to 8, wherein the scanner motor comprises:
at least two bearings, wherein the at least two bearings are each mounted on the central shaft and are spaced apart from each other.

10. A lidar, comprising:
a reflector; and
the scanner motor according to any one of claims 1 to 9, wherein the rotor assembly in the scanner motor is in transmission connection to the reflector.

11. A vehicle, comprising:
a vehicle body; and
the lidar according to claim 10, wherein the lidar is mounted on the vehicle body.
